# EUROPEAN PATENT SPECIFICATION

(11) **EP 3 930 126 B1**
(45) Date of publication and mention of the grant of the patent: **29.04.2026**
(21) Application number: 21180566.8
(22) Date of filing: 21.06.2021
(51) Int. Cl.: H02G 1/08, B65H 75/40, G02B 6/54, G02B 6/44, H02G 11/02

(54) **A DEVICE FOR LAYING CABLES INSIDE A CABLE DUCT**
VORRICHTUNG ZUM VERLEGEN VON KABELN IN EINEM KABELKANAL
DISPOSITIF DE POSE DE CÂBLES À L'INTÉRIEUR D'UN CHEMIN DE CÂBLES

(30) Priority: 23.06.2020 IT 202000014977
(43) Date of publication of application: 29.12.2021
(73) Proprietor: Prysmian S.p.A., 20126 Milan (IT)
(72) Inventor: LE DISSEZ, Arnaud, 20126 Milano (IT); LAVENNE, Alain, 20126 Milano (IT)
(74) Representative: Perani & Partners S.p.A.

(56) References cited:
- WO-A2-2010/111801
- US-A- 4 413 808
- US-B1- 6 722 603

## Description

### Field of the invention

The present invention relates to the field of installation of cables, such as electric cables or optic cables, in cable ducts of a building. In particular, the present invention relates to a device for laying cables inside a cable duct, also referred to as a cable pulling robot.

### Background of the invention

A cable pulling device is a generally automatic tool for inserting a cable inside a cable duct, such as a corrugated wire loom tubing.

The electric systems of any building include a number of cable ducts in which cables are laid. Once the duct is formed, electric and/or optic cables must be inserted from a cable opening at one end of the cable duct, such that they reach another cable opening at the opposite end of the duct.

Manual insertion can be long and difficult, especially when the cable duct has curves or corners where two walls of the building meet. Such difficulties are encountered both upon first installation of the electric system and when installation of further cables is required during maintenance, with the additional obstacle of former cables that are already arranged inside the cable duct.

One example of a known wire puller device is disclosed in WO 2010/111801 A2. A rotary drum supports a winding of a flexible elongate element, in the following named as lead wire. The drum is driven to rotate such that the lead wire unwinds from the drum, thereby being pushed inside a cable duct, and rewinds thereon, such that it is withdrawn from the cable duct and collected again on the drum. The cable to be laid can be connected to the lead wire during unwinding and/or rewinding such that it is pulled inside the cable duct.

A rigid guiding pipe departs from the enclosure that houses the rotary drum. At the end of the guiding pipe a securing beak is provided for stable connection with the opening of the cable duct. The lead wire emerges from the very end of the securing beak.

Another similar example of wire-pulling device is disclosed in US 9419418 B2. Also in this case, a rigid guide member is arranged to guide the lead wire from a rotary drum to the duct opening. Another wire-pulling device is known from US 4 413 808 A, whereby the guide member is flexible.

### Summary of the invention

The Applicant has tackled a problem that has been found during use of the known devices. In fact, given the highly variable arrangements of cable ducts in the buildings, duct openings can be found at many different heights from the floor. Moreover, orientation of the cable duct behind the duct opening may vary too.

Thus, prior art devices should be placed with the rigid guide following as far as possible the orientation of the cable duct, while the rotary drum with the relative enclosure will hang from the duct with a remarkable weight. It may not be easy to find a suitable bearing surface for the drum, and even if it is found the drum will not necessarily lay flat on such surface, but remain vertical or inclined due to orientation of the rigid pipe. Therefore, an operator may be required to sustain the drum during use.

The Applicant has found that the rigid guiding pipe can be advantageously replaced by a flexible guide such as a hose. Accordingly, the securing head for connection to the cable duct, distal from the spool assembly accommodating the lead wire, may have a position and/or an orientation independent of the spool assembly. The spool assembly can be laid horizontally on any suitable bearing surface while the most advantageous orientation of the securing head will be preserved.

Therefore, one aspect of the present invention relates to a device for laying cables inside a cable duct, comprising a spool assembly, having a spool and a spool support. A securing head is configured to be secured at a duct opening of a cable duct. A lead wire has a wound portion at least partially wound on the spool, an end portion projecting from the securing head for insertion in the cable duct upon unwinding the lead wire from the spool, and a connecting portion extending between the wound portion and the end portion. The device comprises a flexible guide which connects the securing head to the spool support, the connecting portion of the lead wire extending slidably along the guide.

Preferably, the guide is configured to be bent such that a relative position and/or orientation of the securing head to the spool assembly can be changed.

According to the invention, the guide comprises a hose, and the connecting portion of the lead wire is arranged inside the hose.

According to the invention, the hose comprises an outer tubular member and an inner tubular member arranged inside the outer tubular member, with the connecting portion of the lead wire being arranged inside the inner tubular member. The outer tubular member is more abrasion resistant than the inner tubular member, and the inner tubular member is more slippery than the outer tubular member.

Preferably, the securing head has an inlet opening and an outlet opening, the inlet opening being connected with the hose. The connecting portion of the lead wire extends through the inlet opening and the outlet opening with the end portion of the lead wire emerging from the outlet opening.

Preferably, the securing head comprises a first jaw and a second jaw. The first jaw and the second jaw are configured to be moved toward each other for clamping an edge of the duct opening therebetween. The inlet opening and the outlet opening are formed on the first jaw.

Preferably, the securing head has a rear portion proximate to the hose and extending substantially aligned with the hose, and a front portion distal from the hose and extending inclined to the rear portion.

Preferably, the outlet opening is formed at a junction between the front portion and the rear portion, and is substantially aligned with the rear portion.

Preferably, the lead wire comprises a metal strip having a main portion with a larger width and a narrow portion with a reduced width. The narrow portion extends at the end portion and/or at the connecting portion of the lead wire.

Preferably, a motor is configured to selectively unwind and rewind the lead wire from/onto the spool, such that a longer or shorter portion of the lead wire projects beyond the securing head.

### Brief description of the drawings

The present invention will now be described in more detail hereinafter with reference to the accompanying drawings, in which embodiments of the invention are shown.

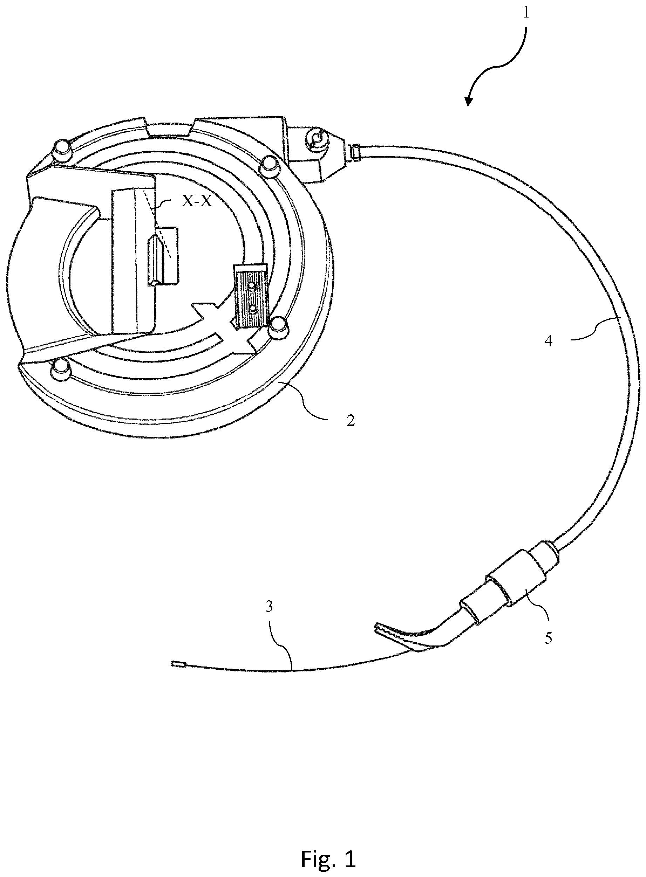

FIG. 1 is a perspective view of a device for laying cables inside a cable duct according to one embodiment of the invention;

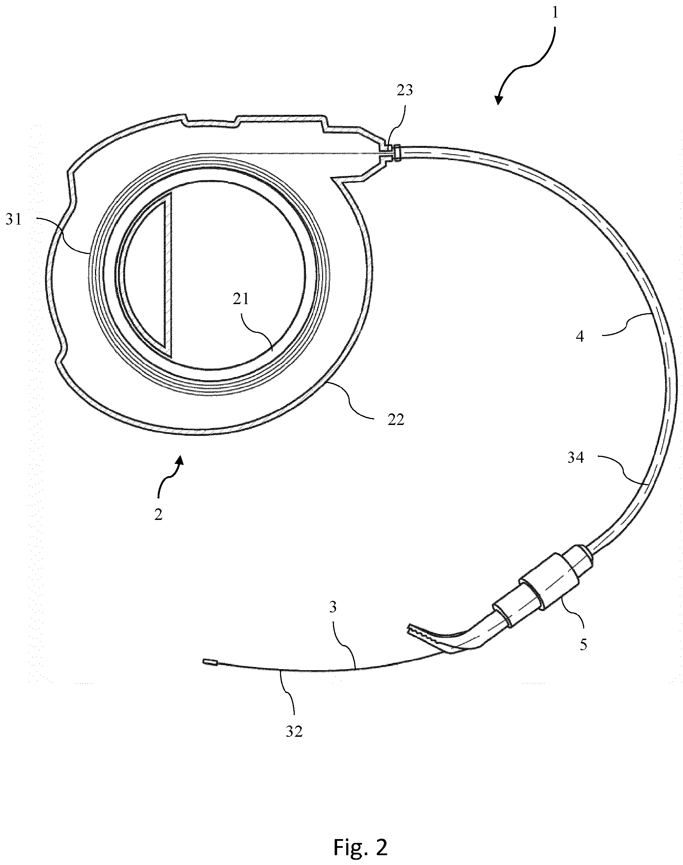

FIG. 2 is a partial section view of the device of figure 1;
FIG. 3 is an enlarged view of a securing head of the device of FIG. 1;
FIG. 4 is a view of a preferred detail of a lead wire of a device for laying cables inside a cable duct;
FIG. 5 is a view of a preferred detail of a flexible guide of a device for laying cables inside a cable duct.

### Detailed description

The figures show a device 1 for laying cables (not shown) inside a cable duct (not shown).

In a known manner the cable duct has a duct opening, namely a first and a second duct openings arranged at opposite end portions of the cable duct. Each duct opening is contoured by a duct edge. In certain cases, an inner and an outer surface of the cable duct extend to the duct edge. In other cases, an outer surface cannot be easily identified since the cable duct can be just a hole in a wall of a building.

The cable duct can be arranged completely inside the wall, or completely outside any wall, or with only the end portions emerging from the wall.

The device 1 comprises a spool assembly 2. The spool assembly 2 has a spool 21 and a spool support 22. The spool support 22 has a spool seat, and the spool 21 is received in the spool seat. The spool support 22 is preferably formed as an enclosure housing the spool 21. The spool 21 is rotatable around a spool axis X-X with respect to the spool support 22.

The device 1 comprises a lead wire 3 having a wound portion 31 that is at least partially wound on the spool 21. Rotation of the spool 21 relative to the spool support 22 causes the lead wire 3 to unwind from the spool 21 or rewind on the spool 21, depending on the rotation direction. Thus, a maximum winding condition and a minimum winding condition can be reached. In the following, reference will be made primarily to the maximum winding condition.

Preferably, the device 1 comprises a motor (not shown) coupled to the spool assembly 2 for rotating the spool 21. Thus, the motor is configured to selectively unwind and rewind the lead wire 3 from/onto the spool 21, in any known manner. For example, a stator of the motor can be fixed to the spool support 22 and a rotor of the motor can be cinematically connected to the spool 21.

The lead wire 3 has a free end portion 32 distal from the spool 21. Such end portion 32 is preferably configured for connection to a cable to be laid in the cable duct. For example, the end portion 32 may have a through hole 33 for fixation, e.g. tying, of the cable.

The lead wire 3 generally has another end portion (not shown) secured to the spool 21, such that rotation of the spool 21 will drive the lead wire 3 and the lead wire will not be detached from the spool 21 even in the minimum winding condition. In the following, when reference to an end portion of the lead wire 3 will be made, this will make reference to the free end portion 32 distal from the spool 21, unless stated otherwise.

The lead wire 3 also has a connecting portion 34 extending between the wound portion 31 and the end portion 32. Accordingly, the connecting portion 34 is not wound on the spool 21.

The lead wire 3 projects at least in part outside the spool assembly 2. In fact, the spool support 22 has a passage opening 23, and the lead wire 3 extends through the passage opening 23. In detail, the end portion 32 and the connecting portion 34 of the lead wire 3 emerge at least in part from the passage opening 23 outside the spool assembly 2.

In the preferred embodiment, the lead wire 3 comprises, or consist in, a metal strip. With the term strip we mean that the lead wire 3 doesn't have a circular cross-section, but has a width that is significantly greater than a thickness, for example the width being at least three times the thickness, preferably at least five times.

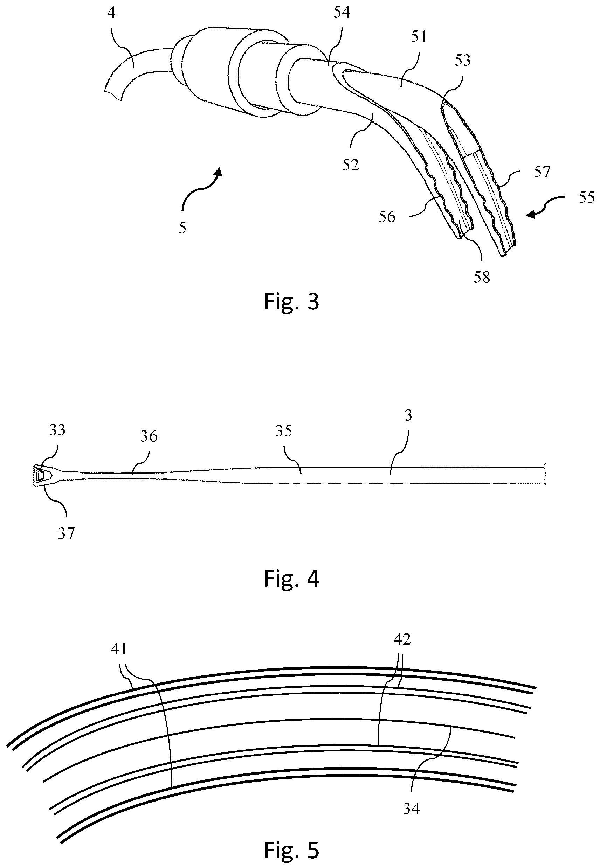

As shown in figure 4, the strip may have a main portion 35 with a larger width and a narrow portion 36 with a reduced width with respect to the main portion 35. The narrow portion 36 extends at the end portion 32 and/or at the connecting portion 34 of the lead wire 3. This means that the narrow portion 36 will be relatively close to the very end of the lead wire 3. The described narrow portion 36 improves flexion and adaptation of the lead wire 3 to the curves of the cable duct.

It should be noted that the construction of the lead cable 3 is preferably substantially the same at the wound portion 31, at the connecting portion 34 and at the end portion 32, except for the narrow portion 36 and other optional minor details which in any case need not occupy the whole end portion 32 or the whole connecting portion 34. Thus, such portions may not be necessarily distinguishable by any physical discontinuity of the lead wire 3, but rather by their position at a chosen time, preferably in the maximum winding condition (the wound portion 31 being wound on the spool 21 inside the spool assembly 2 and the connecting portion 34 and end portion 32 being unwound from the spool 21 emerging outside the spool assembly 21).

It is also noted that a certain section of the lead wire 3 may be considered as a part of the wound portion 31, in the maximum winding condition, and as a part of the connecting portion 34 or end portion 32, in the minimum winding condition. A positional distinction between the connecting portion 34 and the end portion 32 will be specified below.

A flexible guide 4 is connected to the spool assembly 2, in particular to the spool support 22, at the passage opening 23. The connecting portion 34 of the lead wire 3 slidably extends along the guide 4. It should be noted that, during rotation of the spool 21, the lead wire 3 will slide partially inside or outside the spool support 22, while the guide 4 will keep its position relative to the spool support 22.

According to the invention, the guide 4 comprises, or consists in, a hose, and the connecting portion 34 of the lead wire 3 is arranged inside the hose. The inside of the hose communicates with the inside of the spool support 22 at the passage opening 23 for passage of the lead wire 3.

As shown in figure 5, the hose comprises an outer tubular member 41 and an inner tubular member 42 arranged inside the outer tubular member 41. The connecting portion 34 of the lead wire 3 is in turn arranged inside the inner tubular member 42.

According to the invention, the outer tubular member 41 is more abrasion resistant than the inner tubular member 42, such that the inner tubular member 41 and the lead wire 3 are preserved from external harms. On the other hand, the inner tubular member 42 is more slippery than the outer tubular member 41. In particular, this means that the friction coefficient between the inner tubular member 42 and the lead wire 3 is lower than the friction coefficient between the outer tubular member 41 and the lead wire 3.

Thus, the choice of appropriate different materials for the outer tubular member 41 and the inner tubular member 42 will optimize both properties of mechanical resistance and low friction with the lead wire 3. In the preferred embodiment, the outer tubular member 41 is made of armored polyethylene, and the inner tubular member 42 is made of Teflon.

The device 1 further comprises a securing head 5 configured to be secured at the duct opening of the cable duct. The securing head 5 is spaced from the spool assembly 2 and the flexible guide 4 connects the securing head 5 to the spool support 22. In other words, the securing head 5 is connected to one end of the flexible guide 4 that is distal from the spool assembly 2.

Advantageously, the flexibility of the guide 4 makes it configured to be bent such that a relative position and/or orientation of the securing head 5 to the spool assembly 2 can be changed. In general, the property of flexibility is intended herein as the capability of being significantly bent or curved, with respect to a rest condition, without breaking. Bending or curving are considered to be significant if deformation causes the end portions of the guide 4 to have an inclination to each other which is varied with respect to the rest condition by at least 45°, preferably at least 90°.

Instead, there is preferably no rigid connection between the spool assembly 2 and the securing head 5.

In one embodiment, the securing head 5 comprises a first jaw 51 and a second jaw 52. The first jaw 51 and the second jaw 52 are configured to be moved toward and away from each other for securing to, and releasing from, the cable duct, by engaging the cable duct at the duct opening.

For example, the edge of the duct opening can be clamped between the first jaw 51 and the second jaw 52, which will act on the inner and outer surface of the cable duct. To this end, in the embodiment of the figures the first jaw 51 comprises first teeth 56 and the second jaw 52 comprises second teeth 57. The first and second teeth 56, 57 are so arranged that, when the edge of the duct opening is clamped between the first and second jaws 51, 52, the second jaw 52 engages the cable duct at the second teeth 57. In more detail, the second teeth 57 are oriented toward the first jaw 51.

As an alternative securing arrangement, which can be achieved by the same construction of first and second jaws 51, 52 as described above, securing can be obtained by keeping the jaws away from each other, each jaw being pressed against a different portion of the inner surface of the cable duct. In this case, the first jaw 51 will engage the cable duct at the first teeth 56. In fact, the first teeth 56 are oriented away from the second jaw 52.

Thus, one of these securing arrangements can be chosen depending on the size of the cable duct and on the position of the edge of the duct opening.

The end portion 32 of the lead wire 3 projects from the securing head 5 for insertion in the cable duct upon unwinding the lead wire 3 from the spool 21, while the connecting portion 34 is arranged along the guide 4, as commented above. In detail, the end portion 32 projects from the first jaw 51 of securing head 5, the first jaw 51 being configured to be arranged at least partially at an inner side of the duct opening when the securing head 5 is secured to the duct opening.

It should be noted that, depending on the rotation condition of the spool 21, a longer or shorter portion of the lead wire 3 will project beyond the securing head 5.

The securing head 5 has an inlet opening (not shown) and an outlet opening 53 for passage of the lead wire 3. Moreover, a channel is formed within the securing head 5 between the inlet opening and the outlet opening 53. The inlet opening is connected with the hose, for the channel to communicate with the inside of the hose.

The connecting portion 34 of the lead wire 3 extends at least in part within the channel of the securing head 5, and thus through the inlet opening and the outlet opening 53. Instead, the end portion 32 of the lead wire 3 emerges from the outlet opening 53.

In the preferred embodiment, the end portion 32 has an enlarged head 37, thicker than the metal strip, such that the outlet opening 53 of the securing head 5 does not allow passage of the enlarged head 37.

Preferably, both the inlet opening and the outlet opening 53 are formed on the first jaw 51. This means that the channel of the securing head 5 is formed inside the first jaw 51.

It should be noted that either the first jaw 51 may be directly secured to the hose, while the second jaw 52 is movable with respect to the first jaw 51 and to the hose, or the second jaw 52 may be directly secured to the hose, while the first jaw 51 is movable with respect to the second jaw 52 and to the hose.

In the latter case, which is the case of the embodiment of the figures, while the lead wire 3 is arranged inside the channel of the first jaw 51, the second jaw 52 may have a hole in which part of the first jaw 51 is arranged. Despite the channel of the first jaw 51 will be movable relative to the hose, while the hole of the second jaw 52 will be directly secured to the hose, the inlet opening of the securing head 5 is intended to be one of the openings of the first jaw 51.

The securing head 5 has a rear portion 54 proximate to the hose and a front portion 55 distal from the hose. In the preferred embodiment, the rear portion 54 extends substantially aligned with the hose. Instead, the front portion 55 extends inclined to the rear portion 54. Thus, the securing head 5 has a curve at a junction between the front portion 55 and the rear portion 54.

The same is true for each of the first jaw 51 and second jaw 52, which are inclined with the same orientation at the front portion 55. Preferably, the first jaw 51 extends along an outer side of the curve, and the second jaw 52 extends along an inner side of the curve.

The inlet opening is formed at the rear portion 54 of the securing head 5. Instead, the outlet opening 53 is formed at the junction between the front portion 55 and the rear portion 54. In other words, the outlet opening 53 is formed at the curve of the securing head 5. Accordingly, the outlet opening 53 can be substantially aligned with the rear portion 54, i.e. the channel of the securing head 5 can be substantially straight. Nevertheless, the end portion 32 of the lead wire 3 may gently bend just outside the outlet opening 53 to follow the direction of the cable duct, generally aligned with the front portion 55.

The described position of the outlet opening 53 is advantageous relative to an alternative arrangement thereof at the very end of the front portion 55 of the securing head 5, arrangement that is shown in the cited prior art. In fact, if the prior art arrangement is chosen, the channel of the securing head 5 will extend to the end of the front portion 55 too. Therefore, a certain thickness is required for the first jaw 51 along both the rear portion 54 and the front portion 55. Instead, the provision of the outlet opening 53 at the junction of the front portion 55 and rear portion 54 requires the channel to extend just along the rear portion 54. Accordingly, the front portion of 55 the first jaw 51 can be thinner and more adapted for insertion and securing into narrower cable ducts.

In a preferred embodiment, in order to minimize the dimensions of the securing head 5, the second jaw 52 has a throat 58 at the front portion 55 for removably receiving at least part of the first jaw 51. The second teeth 57 are arranged in two rows of second teeth 57, and the throat 58 is arranged between the two rows of second teeth 57.

## Claims

1. A device (1) for laying cables inside a cable duct, comprising:
- a spool assembly (2) having a spool (21) and a spool support (22),
- a securing head (5) configured to be secured at a duct opening of a cable duct,
- a lead wire (3) having a wound portion (31) at least partially wound on the spool (21), an end portion (32) projecting from the securing head (5) for insertion in the cable duct upon unwinding the lead wire (3) from the spool (21), and a connecting portion (34) extending between the wound portion (31) and the end portion (32),
wherein:
- the device (1) comprises a flexible guide (4) which connects the securing head (5) to the spool support (22), the connecting portion (34) of the lead wire (3) extending slidably along the guide (4),
- the guide (4) comprises a hose,
- the hose comprises an outer tubular member (41) and an inner tubular member (42) arranged inside the outer tubular member (41),
- the connecting portion (34) of the lead wire (3) is arranged inside the inner tubular member (42),
- the outer tubular member (41) is more abrasion resistant than the inner tubular member (42), and
- the inner tubular member (42) is more slippery than the outer tubular member (41).

2. The device (1) of claim 1, wherein the guide (4) is configured to be bent such that a relative position and/or orientation of the securing head (5) to the spool assembly (2) can be changed.

3. The device (1) of claim 1 or 2, wherein:
- the securing head (5) has an inlet opening and an outlet opening (53), the inlet opening being connected with the hose,
- the connecting portion (34) of the lead wire (3) extends through the inlet opening and the outlet opening (53) with the end portion (32) of the lead wire (3) emerging from the outlet opening (53).

4. The device (1) of claim 3, wherein:
- the securing head (5) comprises a first jaw (51) and a second jaw (52),
- the first jaw (51) and the second jaw (52) are configured to be moved toward and/or away from each other for engaging the cable duct at the duct opening,
- the inlet opening and the outlet opening (53) are formed on the first jaw (51).

5. The device (1) of any claims 1-4, wherein the securing head (5) has:
- a rear portion (54) proximate to the hose and extending substantially aligned with the hose, and
- a front portion (55) distal from the hose and extending inclined to the rear portion (54).

6. The device (1) of claim 5, wherein the outlet opening (53) is formed at a junction between the front portion (55) and the rear portion (54), and is substantially aligned with the rear portion (54).

7. The device (1) of any claims 1-6, wherein:
- the lead wire (3) comprises a metal strip having a main portion (35) with a larger width and a narrow portion (36) with a reduced width,
- the narrow portion (36) extends at the end portion (32) and/or at the connecting portion (34) of the lead wire (3).

8. The device (1) of any claims 1-7, comprising a motor configured to selectively unwind and rewind the lead wire (3) from/onto the spool (21), such that a longer or shorter portion of the lead wire (3) projects beyond the securing head (5).

## Patentansprüche

1. Vorrichtung (1) zum Verlegen von Kabeln in einem Kabelkanal, umfassend:
- eine Spulenanordnung (2) mit einer Spule (21) und einer Spulenhalterung (22),
- einen Befestigungskopf (5), der so konfiguriert ist, dass er an einer Kanalöffnung eines Kabelkanals befestigt werden kann,
- ein Führungsdraht (3) mit einem Wicklungsabschnitt (31), der zumindest teilweise auf die Spule (21) gewickelt ist, einem Endabschnitt (32), der aus dem Befestigungskopf (5) herausragt, um beim Abwickeln des Führungsdrahts (3) von der Spule (21) in den Kabelkanal eingeführt zu werden, und einem Verbindungsabschnitt (34), der sich zwischen dem gewickelten Abschnitt (31) und dem Endabschnitt (32) erstreckt, wobei:
- die Vorrichtung (1) eine flexible Führung (4) umfasst, die den Befestigungskopf (5) mit der Spulenhalterung (22) verbindet, wobei sich der Verbindungsabschnitt (34) des Führungsdrahts (3) gleitend entlang der Führung (4) erstreckt,
- die Führung (4) einen Schlauch umfasst,
- der Schlauch ein äußeres rohrförmiges Element (41) und ein inneres rohrförmiges Element (42) umfasst, das innerhalb des äußeren rohrförmigen Elements (41) angeordnet ist,
- der Verbindungsabschnitt (34) des Führungsdrahts (3) innerhalb des inneren rohrförmigen Elements (42) angeordnet ist,
- das äußere röhrenförmige Element (41) abriebfester ist als das innere röhrenförmige Element (42) und
- das innere röhrenförmige Element (42) gleitfähiger ist als das äußere röhrenförmige Element (41).

2. Vorrichtung (1) nach Anspruch 1, wobei die Führung (4) so konfiguriert ist, dass sie gebogen werden kann, sodass eine relative Position und/oder Ausrichtung des Befestigungskopfes (5) zur Spulenbaugruppe (2) geändert werden kann.

3. Vorrichtung (1) nach Anspruch 1 oder 2, wobei:
- der Befestigungskopf (5) eine Einlassöffnung und eine Auslassöffnung (53) aufweist, wobei die Einlassöffnung mit dem Schlauch verbunden ist,
- sich der Verbindungsabschnitt (34) des Führungsdrahts (3) durch die Einlassöffnung und die Auslassöffnung (53) erstreckt, wobei der Endabschnitt (32) des Führungsdrahts (3) aus der Auslassöffnung (53) austritt.

4. Vorrichtung (1) nach Anspruch 3, wobei:
- der Befestigungskopf (5) eine erste Backe (51) und eine zweite Backe (52) umfasst,
- die erste Backe (51) und die zweite Backe (52) so konfiguriert sind, dass sie aufeinander zu und/oder voneinander weg bewegt werden können, um in den Kabelkanal an der Kanalöffnung einzugreifen,
- die Einlassöffnung und die Auslassöffnung (53) an der ersten Backe (51) ausgebildet sind.

5. Vorrichtung (1) nach einem der Ansprüche 1 bis 4, wobei der Befestigungskopf (5) Folgendes aufweist:
- einen hinteren Abschnitt (54), der sich in der Nähe des Schlauchs befindet und im Wesentlichen in Ausrichtung mit dem Schlauch verläuft, und
- einen vorderen Abschnitt (55), der vom Schlauch entfernt ist und sich geneigt zum hinteren Abschnitt (54) erstreckt.

6. Vorrichtung (1) nach Anspruch 5, wobei die Auslassöffnung (53) an einer Verbindungsstelle zwischen dem vorderen Abschnitt (55) und dem hinteren Abschnitt (54) ausgebildet ist und im Wesentlichen an dem hinteren Abschnitt (54) ausgerichtet ist.

7. Vorrichtung (1) nach einem der Ansprüche 1 bis 6, wobei:
- der Führungsdraht (3) einen Metallstreifen mit einem Hauptabschnitt (35) mit größerer Breite und einem schmalen Abschnitt (36) mit reduzierter Breite umfasst,
- sich der schmale Abschnitt (36) am Endabschnitt (32) und/oder am Verbindungsabschnitt (34) des Führungsdrahts (3) erstreckt.

8. Vorrichtung (1) nach einem der Ansprüche 1 bis 7, umfassend einen Motor, der so konfiguriert ist, dass er den Führungsdraht (3) selektiv von der Spule (21) abwickelt und auf diese aufwickelt, sodass ein längerer oder kürzerer Abschnitt des Führungsdrahts (3) über den Befestigungskopf (5) hinausragt.

## Revendications

1. Dispositif (1) pour poser des câbles à l'intérieur d'un conduit de câbles, comprenant :
- un ensemble bobine (2) présentant une bobine (21) et un support de bobine (22),
- une tête de fixation (5) configurée pour être fixée à une ouverture de conduit d'un conduit de câbles,
- un fil conducteur (3) présentant une partie enroulée (31) au moins partiellement enroulée sur la bobine (21), une partie d'extrémité (32) faisant saillie de la tête de fixation (5) pour insertion dans le conduit de câbles lors du déroulement du fil conducteur (3) de la bobine (21), et une partie de liaison (34) s'étendant entre la partie enroulée (31) et la partie d'extrémité (32),
dans lequel :
- le dispositif (1) comprend un guide (4) flexible qui relie la tête de fixation (5) au support de bobine (22), la partie de liaison (34) du fil conducteur (3) s'étendant de manière coulissante le long du guide (4),
- le guide (4) comprend un flexible,
- le flexible comprend un élément tubulaire extérieur (41) et un élément tubulaire intérieur (42) agencé à l'intérieur de l'élément tubulaire extérieur (41),
- la partie de liaison (34) du fil conducteur (3) est agencée à l'intérieur de l'élément tubulaire intérieur (42),
- l'élément tubulaire extérieur (41) est plus résistant à l'abrasion que l'élément tubulaire intérieur (42), et
- l'élément tubulaire intérieur (42) est plus glissant que l'élément tubulaire extérieur (41).

2. Dispositif (1) selon la revendication 1, dans lequel le guide (4) est configuré pour être courbé de sorte qu'une position et/ou une orientation relatives de la tête de fixation (5) par rapport à l'ensemble bobine (2) puissent être modifiées.

3. Dispositif (1) selon la revendication 1 ou 2, dans lequel :
- la tête de fixation (5) présente une ouverture d'entrée et une ouverture de sortie (53), l'ouverture d'entrée étant reliée au flexible,
- la partie de liaison (34) du fil conducteur (3) s'étend à travers l'ouverture d'entrée et l'ouverture de sortie (53) avec la partie d'extrémité (32) du fil conducteur (3) sortant de l'ouverture de sortie (53).

4. Dispositif (1) selon la revendication 3, dans lequel :
- la tête de fixation (5) comprend une première mâchoire (51) et une seconde mâchoire (52),
- la première mâchoire (51) et la seconde mâchoire (52) sont configurées pour être déplacées vers et/ou éloignées l'une de l'autre pour être en prise avec le conduit de câbles au niveau de l'ouverture de conduit,
- l'ouverture d'entrée et l'ouverture de sortie (53) sont formées sur la première mâchoire (51).

5. Dispositif (1) selon l'une quelconque des revendications 1-4, dans lequel la tête de fixation (5) présente :
- une partie arrière (54) proche du flexible et s'étendant de manière sensiblement alignée avec le flexible, et
- une partie avant (55) distale du flexible et s'étendant de manière inclinée vers la partie arrière (54).

6. Dispositif (1) selon la revendication 5, dans lequel l'ouverture de sortie (53) est formée au niveau d'une jonction entre la partie avant (55) et la partie arrière (54), et est sensiblement alignée avec la partie arrière (54).

7. Dispositif (1) selon l'une quelconque des revendications 1-6, dans lequel :
- le fil conducteur (3) comprend une bande métallique présentant une partie principale (35) ayant une largeur plus grande et une partie étroite (36) ayant une largeur réduite,
- la partie étroite (36) s'étend au niveau de la partie d'extrémité (32) et/ou au niveau de la partie de liaison (34) du fil conducteur (3).

8. Dispositif (1) selon l'une quelconque des revendications 1-7, comprenant un moteur configuré pour dérouler et enrouler sélectivement le fil conducteur (3) depuis/sur la bobine (21), de sorte qu'une partie plus longue ou plus courte du fil conducteur (3) dépasse de la tête de fixation (5).
